# EUROPEAN PATENT APPLICATION

(11) **EP 3 598 173 A1**
(43) Date of publication of application: **22.01.2020**
(21) Application number: 18210941.3
(22) Date of filing: 07.12.2018
(51) Int. Cl.: G01S 17/42, G01S 7/481, G01S 17/02, G06Q 10/08, H05K 5/00, G01S 17/87, G01S 17/88, H05K 7/00

(54) **METHOD, APPARATUS AND SYSTEM FOR ASSOCIATING A TARGET OBJECT WITH AN ITEM AND NON-TRANSITORY COMPUTER-READABLE RECORDING MEDIUM**

(30) Priority: 16.07.2018 CN 201810781202
(71) Applicant: Beijing Kuangshi Technology Co., Ltd., Beijing 100190 (CN)
(72) Inventor: LIU, Danqing, Haidian District, Beijing 100190 (CN); DING, Yuchun, Haidian District, Beijing 100190 (CN); ZHENG, Pengfei, Haidian District, Beijing 100190 (CN)
(74) Representative: Gulde & Partner

(57) **Abstract**

This disclosure provides a method, system for associating a target object with an item and a non-transitory computer-readable recording medium, and relates to the field of intelligent monitoring technology. The method is applied to a processing device, and the processing device is connected to a laser radar mounted on a rack; the method comprises: acquiring sensing information obtained from that the laser radar senses the target object; determining a trigger point coordinate of the target object within the sensing range according to the sensing information; and determining an item associated with the target object according to the trigger point coordinate of the target object and a position coordinate of said each item stored in advance. This disclosure can be widely applied to many types of racks, suitable for a variety of monitoring occasions..

## Description

### TECHNICAL FIELD

The present disclosure relates to the field of intelligent monitoring technology, and more particularly, to a method, apparatus and system for associating a target object with an item and a non-transitory computer-readable recording medium.

### BACKGROUND

Racks are used in a wide range of industries, such as racks used in shopping malls, vertical cold air cabinets for drinks, glass refrigerators for storing frozen products, bookracks used in libraries or bookstores, and storage racks used in warehouses, etc., they are all racks.

In the application process of racks, the scenario of people taking items from the racks is often involved. Different application places may have different purposes, but they all want to know what items on the racks have been touched by the target objects (such as consumers, staff, etc.). For example, in the smart retail site, the seller wants to know which items on the racks have been touched by the consumers during the purchase process; in the storage site, the manager wants to know what items are taken by the staff from the storage racks, or whether the items fetched by the storage robot from the storage racks are correct. In the prior art, monitoring is carried out mainly by adopting the mode of AI vision, which is too costly and difficult to be widely applied; in the prior art, some adopt the mode of setting sensors to correspond to each item so as to separately monitor each item; since each item needs to correspond to one or more sensors, it results in a large number of sensors and complicated wiring, it is difficult to apply such mode to racks such as the glass refrigerator, the cold air cabinet or racks having densely arranged items.

### SUMMARY

In view of this, the objectives of the present disclosure are to provide a method, apparatus and system for associating a target object with an item, which can be widely applied to many types of racks, suitable for a variety of monitoring occasions.

In order to achieve the above objectives, the technical solutions adopted by the embodiments of the present disclosure are as follows:

An embodiment of the present disclosure provides a method for associating a target object with an item, wherein the method is applied to a processing device, and the processing device is connected to a laser radar mounted on a rack; a line number of the laser radar is lower than a preset line value, and a sensing range of the laser radar covers each item on the rack; the method comprises: acquiring sensing information obtained from that the laser radar senses the target object; determining a trigger point coordinate of the target object within the sensing range according to the sensing information; and determining an item associated with the target object according to the trigger point coordinate of the target object and a position coordinate of said each item stored in advance.

An embodiment of the present disclosure further provides an apparatus for associating a target object with an item, wherein the apparatus is applied to a processing device, and the processing device is connected to a laser radar mounted on a rack; a line number of the laser radar is lower than a preset line value, and a sensing range of the laser radar covers a designed area; the apparatus comprises: an information acquiring module configured to acquire sensing information obtained from that the laser radar senses the target object; a trigger point determining module configured to determine a trigger point coordinate of the target object within the sensing range according to the sensing information; and an association determining module configured to determine an item associated with the target object according to the trigger point coordinate of the target object and a position coordinate of said each item stored in advance.

An embodiment of the present disclosure provides a system for associating a target object with an item, wherein the system comprises a laser radar and a processing device; the laser radar is configured to generate sensing information; the processing device stores a computer program thereon, the method as stated above is executed when the computer program is executed by the processing device.

An embodiment of the present disclosure provides a non-transitory computer-readable storage medium having stored thereon a computer program, wherein steps of the method as stated above are carried out when the computer program is executed by a processor.

The embodiment of the present disclosure provides a method, apparatus and system for associating a target object with an item, the processing device is connected to a laser radar mounted on a rack; the processor can determine the trigger point coordinate of the target object within the sensing range according to the sensing information of the laser radar; and further determine an item associated with the target object according to the trigger point coordinate of the target object and a position coordinate of each item stored in advance. Since the embodiment of the present disclosure adopts the laser radar with a low line number to perform uniform detection on the respective item on the rack, the laser radar with a low line number has a relatively low cost, an AI vision machine with a high cost is not required, also, there is no need to arrange one or more distance sensors for each item, thus it can be widely applied to many types of racks, and be adapted to a variety of application occasions.

Other features and advantages of the embodiment of the present disclosure will be set forth in the description which follows, or parts of the features and advantages may be deferred from the specification or be determined undoubtedly therefrom or be learned by implementing the above techniques of the present disclosure.

For the above described objectives, features and advantages of the present disclosure to be more apparent and understandable, preferred embodiments will be illustrated below in combination with the drawings, so as to provide detailed explanation as follows.

### BRIEF DESCRIPTION OF THE DRAWINGS

In order to more clearly illustrate the specific implementations of the present disclosure or the technical solutions in the prior art, drawings necessary for describing the specific implementations or the prior art will be briefly introduced below, obviously, the following drawings are parts of the implementations of the present disclosure, and for a person of ordinary skill in the art, it is possible to attain other drawings based on these drawings without paying creative effort.
FIG. 1 shows a schematic diagram of structure of an electronic system provided by an embodiment of the present disclosure;
FIG. 2 shows a schematic diagram of structure of a first type of rack provided by an embodiment of the present disclosure;
FIG. 3 shows a schematic diagram of structure of a second type of rack provided by an embodiment of the present disclosure,
FIG. 4 shows a schematic diagram of structure of a third type of rack provided by an embodiment of the present disclosure;
FIG. 5 shows a flowchart of a method for associating a target object with an item provided by an embodiment of the present disclosure;
FIG. 6 shows a schematic diagram of a principle of coordinate determination provided by an embodiment of the present disclosure;
FIG. 7 shows a schematic diagram of structure of a circuit board provided by an embodiment of the present disclosure;
FIG. 8 shows a side view of a rack mounted with a circuit board provided by an embodiment of the present disclosure;
FIG. 9 shows a schematic diagram of structure of another circuit board provided by an embodiment of the present disclosure;
FIG. 10 shows a block diagram of structure of an apparatus for associating a target object with an item provided by an embodiment of the present disclosure;
Fig. 11 shows a schematic diagram of a system for associating a target object with an item according to an embodiment of the present disclosure; and
Fig. 12 shows a schematic diagram of a non-transitory computer readable recording medium according to an embodiment of the present disclosure.

### DETAILED DESCRIPTION OF THE EMBODIMENTS

To make the objectives, technical solutions, and advantages of the present disclosure be more clear and obvious, hereinafter, the technical solutions of the present disclosure will be described clearly and comprehensively in combination with the drawings, obviously, these described embodiments are parts of the embodiments of the present disclosure, rather than all of the embodiments thereof. All the other embodiments obtained by a person of ordinary skill in the art based on the embodiments of the present disclosure without paying creative efforts fall into the protection scope of the present disclosure.

At present, when monitoring what items on the racks are touched by the target object, no matter adopting the AI vision mode or the mode of separately arranging sensors for each item, it is difficult to widely apply to different types of racks; in order to make improvement with respect to this problem, the present disclosure provides a method, apparatus and system for associating a target object with an item, this technique can be implemented by adopting corresponding software and hardware, and can be applied to various monitoring occasions, such as a smart retail scenario of various shopping places, intelligent library, intelligent warehousing/logistics industry, and so on, and the embodiments of the present disclosure will be described in detail below.

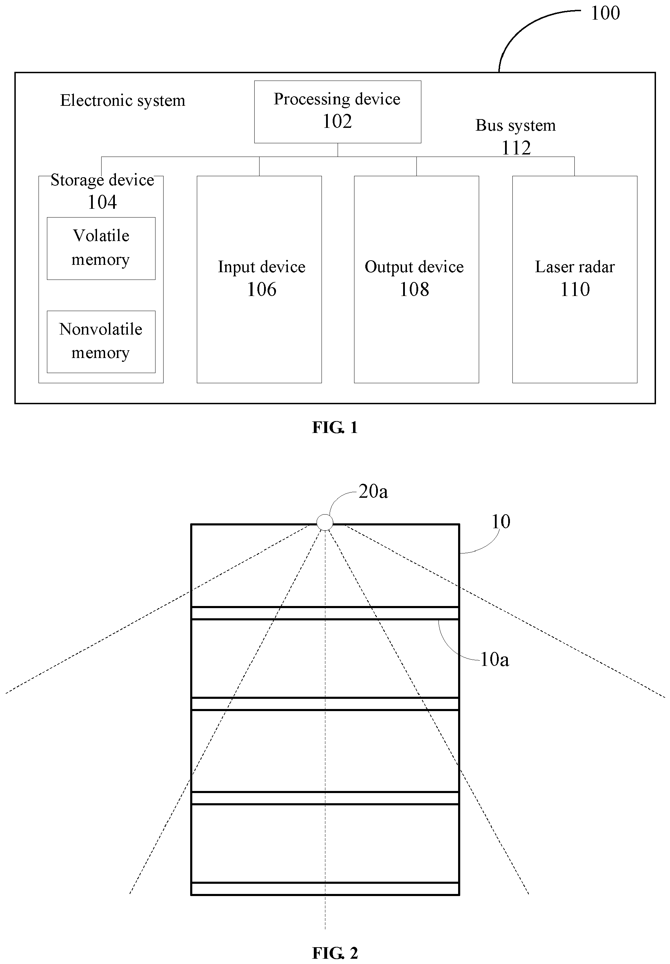

First, an exemplary electronic system 100 for implementing a method, apparatus and system for associating a target object with an item according to an embodiment of the present disclosure will be described with reference to FIG. 1.

FIG. 1 shows a schematic diagram of structure of an electronic system provided by an embodiment of the present disclosure, the electronic system 100 comprises one or more processing devices 102, one or more storage devices 104, an input device 106, an output device 108 and a low-line laser radar 110, these components are interconnected through a bus system 112 and/or other forms of connection mechanisms (not shown). It should be noted that, components and structures of the electronic system 100 shown in FIG. 1 are merely exemplary, not restrictive, and the electronic system may have other components and structures as needed.

The processing devices 102 may be a gateway or a smart terminal, or a device including a processing unit with data processing capability and/or instruction execution capability and capable of processing data of the other components in the electronic system 100 and capable of controlling other components in the electronic system 100 to perform desired functions.

The storage device 104 may include one or more computer program products, said computer program products may include various forms of computer-readable storage medium, such as a volatile memory and/or a nonvolatile memory. The volatile memory may include, for example, a random access memory (RAM) and/or a cache or the like. The nonvolatile memory may include, for example, a read only memory (ROM), a hard disk, a flash memory or the like. One or more computer program instructions may be stored on the computer-readable storage medium, and the processing devices 102 may execute the program instructions to implement client functions (implemented by the processor) in embodiments of the present disclosure described below and/or other desired functions. Various application programs and various data may also be stored in the computer-readable storage medium, such as various data used and/or generated by the application programs or the like.

The input device 106 may be a device used by a user to input an instruction, and may include one or more of a keyboard, a mouse, a microphone, a touch screen or the like.

The output device 108 may output various types of information (e.g., image or sound) to the outside (e.g., a user), and may include one or more of a display, a speaker or the like.

The low-line laser radar 110 may be a low-line mechanical scanning laser radar or a single-point ranging laser radar (also known as a single-point TOF laser radar), and the low-line laser radar can form a sensing plane like a light curtain, and sensing information determined through the sensing plane may be sent to the processing device 102 or stored in the storage device 104 for use by other components.

Illustratively, respective devices in the example electronic system for implementing a method, apparatus and system for associating a target object with an item according to an embodiment of the present disclosure may be integrally disposed or may be dispersedly disposed, for example, the processing device 102, the storage device 104, the input device 106 and the output device 108 are integrally disposed, and the low-line laser radar is separately disposed at other positions of the rack, such as at a top edge side, a bottom edge side or a left/right edge side of the rack.

For ease of understanding, an application example of the electronic system of this embodiment will be further described below. The electronic system may be installed in sites where racks are arranged like a supermarket, a library, a warehouse, and so on; wherein the low-line laser radar may be disposed on the rack, and the low-line laser radar may be a low-line mechanical scanning laser or a single-point ranging laser radar.

The rack provided with the above electronic system may be called a smart rack and may be flexibly applied to various occasions.

This embodiment provides a method for associating a target object with an item. For ease of understanding, the application scenario of the method is first described in this embodiment as follows.

The rack in this embodiment may be any device capable of placing items such as a rack, a bookcase, a refrigerator, a cold air cabinet, etc., and the structure and practical use of the rack are not limited in this embodiment. The item on the rack may also be called a SKU (Stock Keeping Unit), which is a single item. For an item, it may be called a single item when any of its attributes such as brand, model, configuration, grade, suit, package capacity, unit, and use are different from other items. Each item on the rack is placed separately, and the number of each item may be multiple, and multiple items of the same type are placed together. In practical applications, the rack may be provided with laminations, and each lamination may be further provided with a partition for separating different types of items; of course, the rack may also hook items adopting the form of hooks, and accommodate items in the form of multiple storage baskets; the embodiment of the present disclosure does not limit the structure of the rack, nor does it limit the placement of the items on the rack.

A laser radar is amounted on the rack. The laser radar is a radar system that emits a laser beam to detect a characteristic quality such as position and velocity of the target, for example, it emits a probe signal (a laser beam) outwardly, and compares a received signal (a target echo) reflected back from the target with the transmitted signal to obtain information about the target, like parameters such as distance, azimuth, and even shape of the target, thereby achieving target detection. The line number of the laser radar (i.e., the number of laser lines) adopted in this embodiment is lower than a preset line value, and the laser radar may be a low-line mechanical scanning laser radar or a single-point ranging laser radar (also referred to as a single-point TOF laser radar). This embodiment gives the following two application examples.

Application example 1: the laser radar is a low-line mechanical scanning laser radar, the number of laser lines may be 1-8 lines, and a sensing range combination of all low-line mechanical scanning laser radars covers a designed area; the designated area may be an exhibition surface of the rack where the laser radar is located. At least one low-line mechanical scanning laser radar is arranged on the rack. Of course, considering different sizes of different racks, since a detecting range of the mechanical scanning laser radar is limited, two or more low-line mechanical scanning laser radar may be set on the rack, so as to prevent some area of the rack from being undetected.

Referring to the schematic diagram of structure of a first type of rack shown in FIG. 2, it illustrates that the rack 10 is provided with only a single one-line mechanical scanning laser radar 20a at a top end of the rack, and further, a lamination 10a of the rack 10 is also illustrated. As shown in FIG. 2, the one-line mechanical scanning laser radar 20a is disposed at the center of a top edge of the rack 10, and it can form a "light curtain" on the exhibition surface (simply indicated by broken line in FIG. 2) of the rack, this "light curtain" is also the sensing range of the laser radar; the sensing range may be a plane or may also have a certain space, it can cover the exhibition surface of the rack and can monitor various items displayed on the rack. If there is a target object (an object capable of taking the item actively, such as a person, a robot, etc.) taking an item on the rack, the target object will inevitably touch the "light curtain" formed by the laser radar in front of the exhibition surface, thereby being detected by the one-line scanning laser radar 20a, and corresponding sensing information is generated.

Considering that if there are multiple target objects in the front of the rack to take items, there may be mutual occlusion. For example, if more than two consumers simultaneously pick up items in front of the rack, the laser radar only senses an action that consumer 1 takes an item, and consumer 2 is blocked by consumer 1 and cannot be sensed by the laser radar. In order to further improve accuracy of monitoring the items, multiple laser radars may be adopted to monitor the target objects from different directions, thereby making improvement with respect to mutual occlusion of multiple target objects.

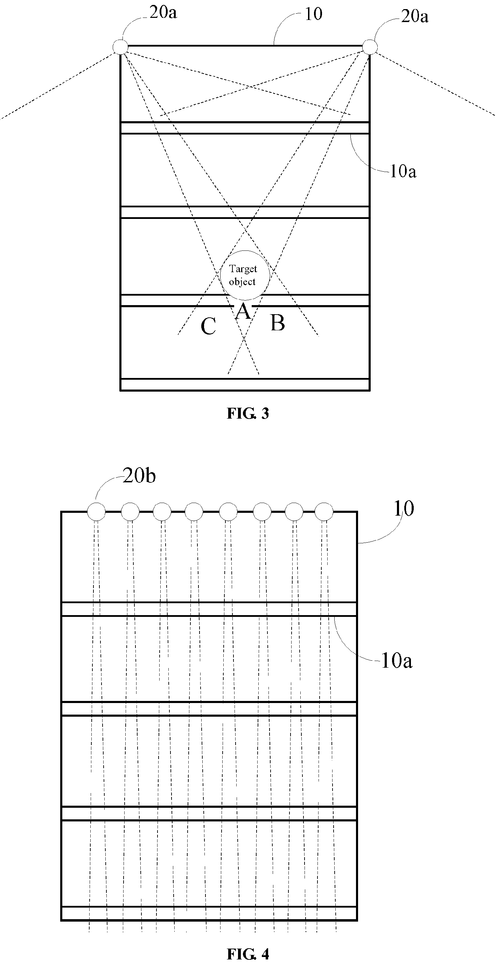

Specifically, refer to the schematic diagram of structure of a second type of rack shown in FIG. 3, which illustrates that a top edge side of the rack 10 is provided with two one-line mechanical scanning laser radars 20a, and each one-line mechanical scanning laser radar 20a is disposed at one top corner of the rack; in addition, FIG. 3 also briefly shows the target object that reaches for an item. As can be seen from FIG. 3, area A and area B are occluded by the target object with respect to one one-line mechanical scanning laser radar 20a, and area A and area C are occluded by the target object with respect to the other one-line mechanical scanning laser radar, and area A is occluded by the target object with respect to a combination of the two one-line mechanical scanning laser radar 20a, while the remaining areas are within a detectable range of the laser radar, and the laser radar can detect the target object in the other area except area A. This mode of jointly detecting by adopting multiple laser radars can reduce a size of the area that is occluded mutually by multiple target objects, thereby effectively improving the monitoring reliability.

Application example 2: the laser radar is a single-point ranging laser radar, and the number of the single-point ranging laser radar is multiple; the multiple single-point ranging laser radars line up in accordance with a preset interval; a sensing range combination of the multiple single-point ranging laser radars covers a designed area. The preset interval may be arrangement at equal intervals, or may be arrangement at non-equal intervals, this may be flexibly set according to actual needs.

The single-point ranging laser radar may also be called a single-point ToF laser radar. Multiple single-point ToF laser radars can form a single-point ToF array and be disposed on the rack. Specifically, the single-point ToF array may be disposed on a top edge, a bottom edge, and an edge side of either one of the left and right sides of the rack, and the multiple single-point ToF laser radars combine to form a "light curtain" covering the exhibition surface of the rack.

The main feature of the single-point ToF laser radar adopted in this embodiment is that the divergence angle is small, such as the field of view (FoV) of each single-point ToF laser radar is less than 2°, and a spot size of the beam emitted by such laser radar is smaller than a spacing distance between adjacent single-point ToF laser radars. In practical applications, the TOFRANGE 600 module of the Swiss company Espros may be adopt for implementation. The advantage of adopting the single-point ToF laser radar with a small divergence angle is that it can greatly reduce the interference of adjacent laser radars, thereby improving position accuracy. Referring to the schematic diagram of structure of a third type of rack shown in FIG. 4, it illustrates that multiple single-point ToF laser radars 20b are arranged on the top edge side of the rack, as shown in FIG. 4, a sensing range combination of the multiple single-point ToF laser radars 20b covers the exhibition surface of the rack; and the divergence angle of each single-point ToF laser radar 20b is small, thus accurate ranging of the target object is achieved.

Usually, the field of view of the traditional ToF sensor is relatively large, for example, FoV of the ToF sensor commonly used in mobile phones is around 25°, possible problems with large FoV are: the ToF sensor usually performs a weight averaging processing on the distances of the respective target objects detected within a FoV vision (that is, a sensing range of the sensor), so as to obtain a measured distance of the target object. Assuming that the sensed target object is the arm and the distance between the arm and the ToF sensor exceeds a set length (e.g., 1 m), the area of the arm is much smaller than the area of the FoV vision when FoV of the TOF sensor is relatively large, resulting in that the measured distance calculated between the arm and the TOF sensor has a large error with respect to the actual distance, which causes incorrect positioning.

Therefore, this embodiment does not adopt the ToF sensor carried in a common consumer electronic device (such as a mobile phone), instead it adopts the single-point ranging laser radar (i.e., the single-point TOF laser radar) with a small FoV for sensing the target object, to accurately determine a contact coordinate of the target object.

Of course, application example 1 and application example 2 should not be regarded as limitations, in practical applications, the type, number and a mounting manner of the low-line laser radars may be flexibly selected according to the size of the rack, the accuracy requirements of the required monitoring data, and the cost requirements, details will not be described herein.

The laser radar described above is connected to a processing device for carrying out the method for associating a target object with an item, and the processing device may be a gateway or other device having data processing capability, such as a smart terminal like a computer. The processing device can independently process the sensing information of the laser radar, or can be connected to a server, analyze and process the information together with the server, and upload the processing result to the cloud.

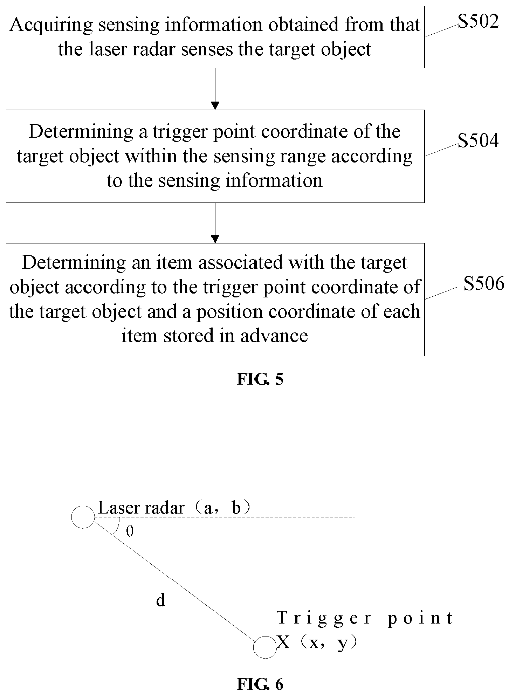

Based on the above introduction, referring to a flowchart of a method for associating a target object with an item as shown in FIG. 5, the method is carried out by a processing device, the processing device is connected to a laser radar mounted on a rack, a sensing range of the laser radar covers each item on the rack; the method comprises:

Step S502, acquiring sensing information obtained from that the laser radar senses the target object. Herein, the sensing information may include a distance value and an azimuth angle of the target object relative to the target laser radar. The target object may be a consumer, a book reader or a staff member, or the like, or may be a work robot to be monitored. If it is a shopping occasion, the target object may be a consumer, if it is a storage inventory occasion, the target object may be a staff member or a robot, etc., if it is a library occasion, the target object may be a book reader; it should be understood that the target object in different situations has a different identity.

Step S504, determining a trigger point coordinate of the target object within the sensing range according to the sensing information.

If the number of the laser radar is only one, for example, a single one-line mechanical scanning laser radar is disposed at the center of a top edge of the rack, then the sensing information is generated by that the unique laser radar detects the target object. The laser radar forms a "light curtain" on the exhibition surface of the rack, the "light curtain" is the sensing range of the laser radar. Taking the target object being a human being as example, when this person reaches for an item, the hand touches the sensing range, and the laser radar can know the coordinate of the hand within the sensing range (that is, the above-mentioned trigger point coordinate).

If the number of the laser radar is multiple, the target object may be sensed by one of the laser radars depending on a different location where the target object resides, when the target object is taking an item, of course, it may be sensed by multiple laser radars at the same time. The laser radar that senses the target object is called a target laser radar in this embodiment, for details, execution may be carried out by referring to the following steps:
(1) Determining a serial code of a target laser radar based on the sensing information; wherein the sensing information is generated by the target laser radar, and the sensing information includes a distance value and an azimuth angle of the target object relative to the target laser radar. It should be understood that the laser radars that have detected the target object will send their own sensing information to the processing device, and the processing device may determine the corresponding target laser radar according to the sensing information.
(2) Searching for a position coordinate of the target laser radar according to the serial code of the target laser radar. Typically, each laser radar is fixed to the rack and the position coordinate is pre-calibrated and stored locally or in the cloud. In an implementation, the processing device may locally store a radar information table, and the radar information table records correspondence between the serial code and the position coordinate of the radar.
(3) Determining the trigger point coordinate of the target object within the sensing range according to the position coordinate of the target laser radar as well as the distance value and the azimuth angle of the target object relative to the target laser radar.

Referring to the schematic diagram of a principle of coordinate determination shown in FIG. 6, it simply illustrates a principle of determining the trigger point coordinate. In FIG. 6, it is assumed that the coordinate of the laser radar L is (a, b), and the coordinate of the trigger point X is (x, y), and the distance from X as detected by the laser radar is d, and the azimuth angle of X with respect to L is θ, then, the trigger point coordinate x=a+d* cosθ, y=b+d*sinθ can be simply determined. It can be understood that there may be multiple trigger point coordinates, for example, when the target object is reaching for an item, multiple points on the hand are sensed by the target laser radar, and the sensed points of the target object are the trigger points.

Step S506, determining an item associated with the target object according to the trigger point coordinate of the target object and a position coordinate of each item stored in advance.

Specifically, a target item may be determined according to the trigger point coordinate of the target object and a position coordinate of each item stored in advance; wherein a position coordinate of the target item is within a preset distance from the trigger point coordinate of the target object; thereafter, the target item is determined as an item associated with the target object.

In practical applications, the position coordinate and the trigger point coordinate of the target item may each be selected as a representative one, such as a center point coordinate of the target item is selected as the position coordinate of the target item, and a center coordinate of the multiple trigger point coordinates is selected as the trigger point coordinate. Of course, the position coordinate of the target item may also be a set of coordinate points, and the trigger point coordinate may also be multiple, the position coordinate of the target item is represented by a point cloud A, and the trigger point coordinate of the target object is represented by a point cloud B, then a distance between the point cloud A and the point cloud B is determined. In practical applications, a coincidence degree of the two point clouds may be directly judged, and the higher the coincidence degree is, the closer the position coordinate of the target object is to the trigger point coordinate of the target object. If the trigger point coordinate is close to the position coordinate of a certain item, it can be determined that the target object is to take this item, and this item is associated with the target object.

With the method for associating a target object with an item provided above in the embodiment of the present disclosure, the processing device can determine a trigger point coordinate of the target object within the sensing range according to the sensing information of the laser radar and further determine an item associated with the target object according to the trigger point coordinate of the target object and a position coordinate of each item stored in advance. Since the embodiment of the present disclosure adopts the laser radar with a low line number to perform uniform detection on the respective item on the rack, the laser radar with a low line number has a relatively low cost, an AI vision machine with a high cost is not required, also, there is no need to arrange one or more distance sensors for each item, thus it can be widely applied to many types of racks, and be adapted to a variety of application occasions.

The processing device typically needs to store the position coordinate of the respective item in advance, the position coordinate may typically include a lateral position coordinate and a longitudinal position coordinate. The traditional way uses manual to calibrate the lateral and longitudinal position coordinates of each item one by one, which is time-consuming and laborious and inefficient; moreover, once the position of the lamination is adjusted up and down, the longitudinal position coordinate of each item changes accordingly, in order to ensure accuracy of position coordinate of the item, it is usually necessary to manually recalibrate the height of each lamination and adjust the position information of each item accordingly. In order to reduce labor cost, this embodiment provides a specific implementation for automatically determining the position coordinate of a respective item, which may be carried out by the following steps:
Step 1, obtaining a height of a respective lamination of the rack.
Step 2, obtaining position information and size information of each item; wherein the position information includes a serial code of the lamination on which the item is located, and a horizontal order number of the item on the lamination on which the item is located. That is, the longitudinal position, the horizontal positon and the size information of each item are obtained; the longitudinal position is represented by the serial code of the lamination on which the item is located, the lateral position is represented by the order number of the item on the lamination on which the item is located.
Step 3, determining a longitudinal position coordinate of each item according to the serial code of the lamination on which each item is located and the height of the respective lamination. For example, one rack includes four laminations of lamination a, lamination b, lamination c and lamination d, it is assumed that an initial status of the rack is: the height of lamination a from the ground is 10 cm, and the height of lamination b from the ground is 40 cm, the height of lamination c from the ground is 70 cm, and the height of lamination d from the ground is 100 cm. Three types of items are set on lamination b, which are SKU-b1, SKU-b2, and SKU-b3, respectively; three types of items are set on lamination c, which are SKU-c1, SKU-c2, and SKU-c3, respectively. Taking SKU-b1 and SKU-c1 as an example, SKU-b1 is located on lamination b, and the height of lamination b is 40 cm, thus the longitudinal position coordinate of SKU-b1 is 40; similarly, the longitudinal position coordinate of SKU-c1 is 70.
Step 4, determining a lateral position coordinate of each item according to the horizontal order number and the size information of each item.

It is assumed that SKU-b1, SKU-b2 and SKU-b3 are sequentially arranged on the rack, it is known that a lateral dimension of SKU-b1 is 40 cm, a lateral dimension of SKU-b2 is 30 cm, and a lateral dimension of SKU-b3 is 50 cm, if it is further assumed that there is a certain vacancy spacing between two adjacent SKUs (assumed as 10cm), then it may be set that the lateral position coordinate of SKU-b1 is 0∼40, the lateral coordinate of SKU-b2 is 50∼80, and the lateral coordinate of SKU-b3 is 90∼140.

In an implementation, a center point of each SKU may be taken as the lateral position coordinate of the SKU, and in conjunction with the longitudinal position coordinate of each SKU, it can be obtained that the position coordinate of SKU-b1 is(20, 40), the position coordinate of SKU-b2 is (65, 40), the position coordinate of SKU-b3 is (115, 40).

After determining the position coordinates of various types of items on the rack, the position coordinates of the various types of items may be stored locally in the processing device or in the cloud for subsequent usage.

With the above mode, the position coordinates of various types of items on the rack can be easily determined without item-by-item manual calibration, so as to facilitate that the processing device determines the item associated with the target object according to the trigger point coordinate of the target object and the position coordinate of each item, that is, determining the item taken by the target object.

Considering that the lamination on the rack may be adjusted, for example, the clerk in the supermarket usually adjusts the height of the lamination on the rack due to the need for commodity placement, based on this, this embodiment provides a method for automatically obtaining a height of each lamination on the rack, which is described in detail as follows.

The rack is further longitudinally provided with a circuit board; the circuit board is provided with multiple electrical contacts in a longitudinal direction at a predetermined spacing; each lamination is provided with a thimble through which the lamination is connected with the electrical contact on the circuit board; specifically, the circuit board may be a PCB (Printed Circuit Board). The circuit board is also connected to the processing device to report the status of each electrical contact on the circuit board to the processing device.

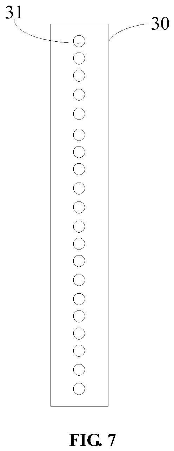

For ease of understanding, reference may be made to the schematic diagram of structure of a circuit board shown in FIG. 7, which illustrates that the circuit board 30 is longitudinally provided with multiple electrical contacts 31, and different electrical contacts are different in height from the ground; each electrical contact may be considered to be in a free status when it is not connected to the thimble of the lamination, and may be considered to be in contact status if it is connected to the thimble. The longitudinal length of the circuit board may be matched to the height of the rack, for example, the longitudinal length of the circuit board is equal to the height of the rack; considering that the top and bottom laminations of the rack are usually fixed in position, the longitudinal length of the circuit board may be properly reduced so as to be used to only sense the positions of middle multiple laminations of the rack.

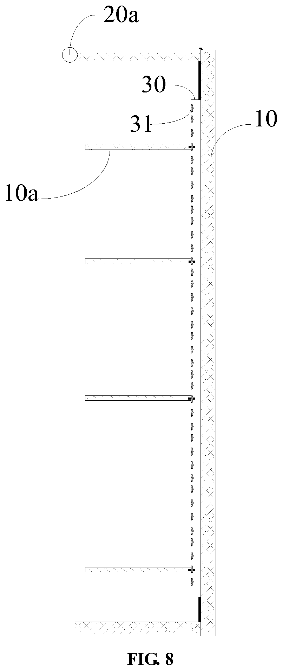

Referring to the side view of a rack mounted with a circuit board as shown in FIG. 8, it illustrates that the circuit board 30 is mounted on a backplane of the rack 10. Of course, if the rack does not have a backplane, the circuit board may be mounted on a support bar of the rack, regardless of the structure of the rack, the circuit board only needs to be placed on a fixed side between the rack and the lamination, and the lamination needs to touch the circuit board when it is jointed with the rack. As shown in FIG. 8, multiple electrical contacts 31 are disposed on the circuit board 30, and the thimble (not explicitly shown in FIG. 8) is provided at where each of the four laminations 10a and the backplane of the rack are jointed, and the thimble contacts the electrical contact. When the lamination is adjusted in height, the electrical contact that the thimble contacts also naturally changes.

In an implementation, the multiple electrical contacts may be directly connected to a processing chip (referred to as a circuit board processing chip) disposed on the circuit board, once an electrical contact is connected to the thimble on the lamination, the electrical contact sends a low level signal to the circuit board processing chip, whereas the electrical contact that is not connected to the thimble is in a free status and always sends a high level signal to the circuit board processing chip. The circuit board processing chip is capable of determining the status of each electrical contact based on the received signal and transmitting the status of each electrical contact to the processing device. Of course, the electrical contact that is connected to the thimble may send a high level signal to the circuit board processing chip, and the electrical contact that is not connected to the thimble sends a low level signal to the circuit board processing chip, which is not limited herein. The processing device can identify which electrical contact is connected to the thimble of the lamination according to the signals sent by the respective electrical contacts, so that the height of the lamination can be further determined.

Based on this, when the processing device acquires the height of the respective lamination of the rack, reference may be made to the following steps for execution:
(1) Obtaining a status of each electrical contact on the circuit board; the status including a free status or a contact status. The free status is the status in which the electrical contact is not connected to the thimble (also referred to as the vacant status). The contact status is a status in which the electrical contact is connected with the thimble of the lamination.
(2) Determining a serial code of a target electrical contact according to the status of the respective electrical contact; wherein the target electrical contact is an electrical contact in a contact status; and the number of the target electrical contact matches with the number of the lamination. For example, there are 20 electrical contacts from C1 to C20 in the order from bottom to top on the circuit board, the status of C2, C8, C14 and C19 is a contact status, and the remaining electrical contacts are all in a free status, then C2, C8, C14 and C19 are the target electrical contact, if one lamination has one thimble, the number of target electrical contact is equal to the number of lamination, and a total of four laminations can be determined.
(3) Searching for position information of the respective target electrical contacts according to the serial code of the target electrical contact and a pre-established electrical contact information table; wherein the electrical contact information table stores correspondence between the serial codes and the position information of the electrical contacts. For the sake of briefness, position information of the electrical contacts is represented only by height.
(4) Determining the height of the respective lamination based on position information of the respective target electrical contact. For example, the heights of C2, C8, C14 and C19 are 10cm, 40cm, 70cm and 100cm, respectively, then the correspondence between the laminations and the electrical contacts is determined as follows: lamination a corresponds to C2, lamination b corresponds to C8, lamination c corresponds to C14, and lamination d corresponds to C19. That is, it can be determined that the height of lamination a from the ground is 10 cm, the height of lamination b from the ground is 40 cm, the height of lamination c from the ground is 70 cm, and the height of lamination d from the ground is 100 cm.

It is assumed that a related personnel adjusts the height of lamination b, the status of the respective electrical contact as obtained by the processing device shows that C2, C10, C14 and C19 are in a contact status, and the height of C10 is 48 cm, correspondingly, it is known that C10 corresponds to lamination b, the current height of lamination b is 48cm; the positions of the other laminations are unchanged. In this case, the processing device can further modify the longitudinal position coordinate of the respective item located on lamination b to ensure position accuracy of the item on the rack.

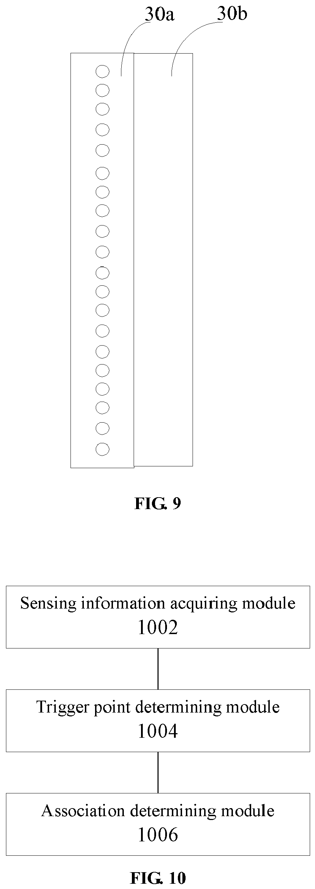

In addition, considering that there may be also electrical equipment such as electronic tags, headlamps and the like on the conventional rack, a power source may be also disposed on the circuit board for supplying power to the electrical equipment on the respective lamination. Referring to the schematic diagram of structure of another circuit board shown in FIG 9, a contact area 30a and a power source area 30b are illustrated, the power source area 30b is juxtaposed with the contact area 30a and is also a longitudinal elongated area. The power source area 30b may have one power input terminal and multiple power output terminals; the power input terminal may be connected to an external power source uniformly, and the power output terminals may supply power to the fixed electrical devices of the respective lamination on the rack. Since the circuit board is vertically fixed on the side of the rack, and the length of the power source area is matched with the height of the rack, it is more convenient to supply power to the fixed electrical devices on the respective lamination of the rack, which makes improvement with respect to the problem that the conventional rack is inconvenient to supply power to the respective electrical equipment distributed on the rack due to limitation of its own structure.

The method for associating a target object with an item provided by this embodiment mainly adopts the manner of low-beam laser radar to minor that the target object touches the item on the rack, and also obtains the height of the lamination automatically by using the circuit board. It can be widely used in occasions where it is necessary to monitor the relationship between target objects and items, like smart retail scenarios, smart libraries, smart warehousing/logistics industries, etc. The advantages of this embodiment are further described below with a smart retail scenario as an example, wherein the target object is the consumer and the item is the commodity on the rack.
(1) In a smart retail scenario, AI vision machines typically require multiple cameras disposed on the rack to capture image information from multiple angles. On one hand, the cost is high, on the other hand, deployment of the camera is easy to bring psychological pressure to the consumer, because the camera will collect the consumer's portrait information in real time, it may also expose privacy of the consumer, the consumer may have poor security sense and bad user experience.
   The low-line laser radar provided by the embodiment can form a "light curtain" on the exhibition surface of the rack, and sense the consumer through the "light curtain", and does not collect image information of the consumer, and basically does not involve personal privacy of the consumer, which enables relaxed shopping of the consumer.
(2) Under normal circumstances, the lower the line number of the laser radar is, the lower the cost is. This embodiment adopt the low-line laser radar that has a low cost to monitor the action of that the consumer takes the commodity, for example, the one-line scanning laser radar can achieve the monitoring effect, and the cost is much lower than the AI vision machine and the depth sensor. It can be understood that the cost of the depth sensor is still high at present, and the low-line laser radar of this embodiment has a low cost and can be widely applied to various occasions.
(3) The number of the laser radar adopted in this embodiment may be at least one, and is disposed at the edge of the rack, so that the consumer who takes the commodity can be detected, and monitoring of the commodity on the rack is achieved. There is no need for one or more infrared distance sensors to correspond to each item on the rack. The wiring of the mode provided in this embodiment is simple, and is also suitable for a special type of rack such as a glass refrigerator or a cold air cabinet, which is convenient to implement.
(4) This embodiment can learn the height of the lamination of the rack by using the circuit board provided with the electrical contacts, and even if the height of the lamination is adjusted, the height of the respective lamination adjusted layer can be automatically obtained, and further, the position coordinate of the respective commodity can be determined correspondingly, thus ensuring accuracy of the association between the consumer and the commodity. This method does not require manual recalibration of the height of the lamination, which better saves labor cost, improves data accuracy while ensuring efficiency improvement, thus avoids common problems such as measurement errors and recording errors occurring along with manual calibration.
(5) The circuit board provided in this embodiment may further be provided with a power source area, and the length of the power source area is also matched with the height of the rack, so that it is more convenient to supply power to the fixed electrical equipment of the respective lamination on the rack, which makes improvement with respect to the problem that the conventional rack is inconvenient to supply power to the various electrical equipment distributed on the rack due to limitation of its own structure.

In summary, the method for associating a target object with an item provided by this embodiment mainly adopts the low-line laser radar to monitor that the target object contacts the items on rack, and better establishes a "person-commodity relationship", the low-line laser radar can usually measure the target position (distance and angle) more accurately, and the cost is much lower than AI vision, the high-line laser radar and the depth sensor, it can be widely used in many types of rack, suitable for a variety of monitoring occasions.

Corresponding to the method for associating a target object with an item provided in the forgoing embodiment, this embodiment provides an apparatus for associating a target object with an item, wherein the apparatus is applied to a processing device, and the processing device is connected to a laser radar mounted on a rack; line number of the laser radar is lower than a preset line value, and a sensing range of the laser radar covers a designed area.

Referring to the block diagram of structure of an apparatus for associating a target object with an item shown in FIG. 10, the apparatus comprises:
a sensing information acquiring module 1002 configured to acquire sensing information obtained from that the laser radar senses the target object;
a trigger point determining module 1004 configured to determine a trigger point coordinate of the target object within the sensing range according to the sensing information; and
an association determining module 1006 configured to determine an item associated with the target object according to the trigger point coordinate of the target object and a position coordinate of said each item stored in advance.

With the apparatus for associating a target object with an item provided above in the embodiment of the present disclosure, the processing device can determine a trigger point coordinate of the target object within the sensing range according to the sensing information of the laser radar and further determine an item associated with the target object according to the trigger point coordinate of the target object and a position coordinate of each item stored in advance. Since the embodiment of the present disclosure adopts the laser radar with a low line number to perform uniform detection on the respective item on the rack, the laser radar with a low line number has a relatively low cost, an AI vision machine with a high cost is not required, also, there is no need to arrange one or more distance sensors for each item, thus it can be widely applied to many types of racks, and be adapted to a variety of application occasions.

In an implementation, the laser radar is a mechanical scanning laser radar; the number of the mechanical scanning laser radar is at least one; and a sensing range combination of all the mechanical scanning laser radars covers each item on the rack.

In another implementation, the laser radar is a single-point ranging laser radar, and the number of the single-point ranging laser radar is multiple; and the multiple single-point ranging laser radars line up in accordance with a preset interval; a sensing range combination of the multiple single-point ranging laser radars covers each item on the rack.

In a specification implementation, the trigger point determining module 1004 is configured to:
determine a serial code of a target laser radar based on the sensing information; wherein the sensing information is generated by the target laser radar, and the sensing information includes a distance value and an azimuth angle of the target object relative to the target laser radar;
search for a position coordinate of the target laser radar according to the serial code of the target laser radar; and
determine the trigger point coordinate of the target object within the sensing range according to the position coordinate of the target laser radar as well as the distance value and the azimuth angle of the target object relative to the target laser radar.

The above association determining module 1006 is configured to:
determine a target item according to the trigger point coordinate of the target object and a position coordinate of said each item stored in advance; wherein the position coordinate of the target item is within a preset distance from the trigger point coordinate of the target object; and
determine the target item as an item associated with the target object.

Furthermore, the apparatus described above further comprises:
a height obtaining module configured to obtain a height of a respective lamination of the rack;
an item information obtaining module configured to obtain position information and size information of said each item; wherein the position information includes a serial code of the lamination on which the item is located, and a horizontal order number of the item on the lamination on which the item is located;
   a longitudinal coordinate determining module configured to determine a longitudinal position coordinate of said each item according to the serial code of the lamination on which said each item is located and the height of the respective lamination; and
a lateral coordinate determining module configured to determine a lateral position coordinate of said each item according to the horizontal order number and the size information of said each item.

In an implementation, the rack is further longitudinally provided with a circuit board; the circuit board is provided with multiple electrical contacts in a longitudinal direction at a predetermined spacing; each lamination is provided with a thimble through which the lamination is connected with an electrical contact on the circuit board. Based on this, the above height obtaining module is further configured to:
obtain a status of the respective electrical contact on the circuit board; the status including a free status or a contact status;
determine a serial code of a target electrical contact according to the status of the respective electrical contact; wherein the target electrical contact is an electrical contact in a contact status; and the number of the target electrical contact matches with the number of the lamination;
search for position information of the respective target electrical contact according to the serial code of the target electrical contact and a pre-established electrical contact information table; wherein the electrical contact information table stores correspondence between the serial codes and the position information of the electrical contacts; and
determine the height of the respective lamination based on position information of the respective target electrical contact.

In another implementation, the circuit board described above is further provided with a power source for supplying power to electrical equipment on the respective lamination; the electrical equipment includes electronic tags and/or headlamps.

The implementation principle of and the technical effects produced by the apparatus provided in this embodiment are the same as those in the foregoing embodiment. For the sake of briefness, as for those not mentioned in the apparatus embodiment, reference may be made to the corresponding content in the foregoing method embodiment.

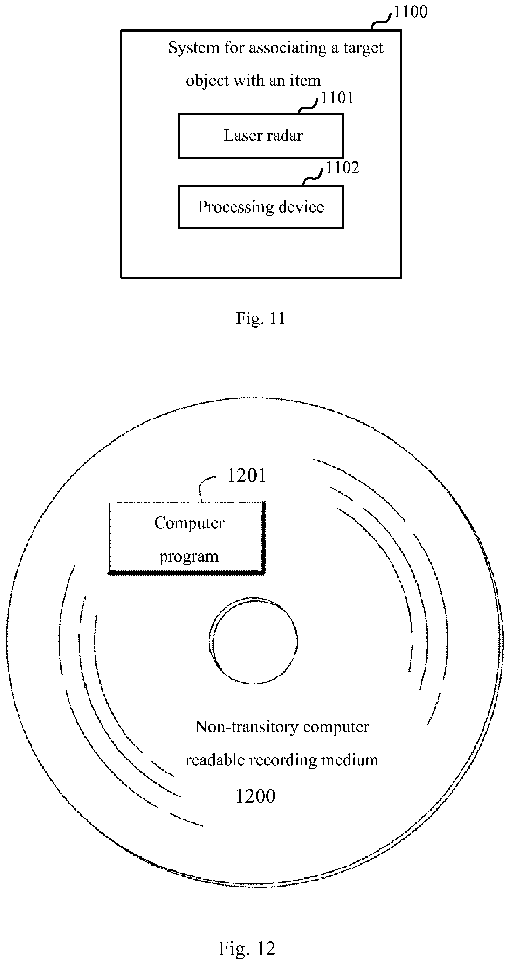

As shown in Fig. 11, the embodiment of the present disclosure provides a system 1100 for associating a target object with an item, the system 1100 comprises a laser radar 1101 and a processing device 1102. The laser radar 1101 is configured to generate sensing information; the processing device 1102 stores a computer program thereon, the method for associating a target object with an item as stated above is executed when the computer program is executed by the processing device.

A person skilled in the art can clearly understand that, for convenience and brevity of the description, as for the specific working process of the above system, reference may be made to the corresponding process in the foregoing method embodiment, no details repeated herein.

Furthermore, as shown in Fig. 12, the embodiment of the present disclosure further provides a non-transitory computer-readable recording medium 1200 having stored thereon a computer program 1201, wherein steps of the method for associating a target object with an item as stated above are executed when the computer program 1201 is run by a processing device.

The computer program product of the method, apparatus and system for associating a target object with an item provided by the embodiments of the present disclosure includes a computer-readable storage medium storing program codes, and the program codes include instructions for executing the method described in the above method embodiments. As for specific implementations, reference may be made to the method embodiments, details are not repeated herein.

The above functions may also be stored in one computer-readable storage medium when being implemented in the form of a software functional module and sold and used as an independent product. Based on such understanding, the substance or the part that contributes to the prior art of the technical solutions of the present disclosure or the technical solution part may be reflected in the form of a software product, the computer software product may be stored in one storage medium, and include several instructions for causing a computer device (which may be a personal computer, a server, or a network device) to fully or partially perform the method described in the various embodiments of the present disclosure. The aforesaid storage medium includes various mediums capable of storing program codes like a mobile storage device, a Read Only Memory (ROM), a magnetic disk, or an optical disk.

Last, it should be noted that, the above embodiments are merely specific implementations adopted for explaining the technical solutions of the present disclosure, rather than limiting the present disclosure, the protection scope of the present disclosure is not limited thereto. Although the present disclosure has been described in detail with reference to the above embodiments, a person of ordinary skill in the art should understand that, within the technical scope revealed by the present disclosure, various modifications may also be made to the technical solutions recorded in the preceding embodiments or changes may be made thereto easily, or parts of the technical features thereof may be replaced by equivalents, and essence of the corresponding technical solutions with these modifications or replacements still falls into the spirit and scope of the technical solutions in the embodiments of the present disclosure. These modifications, changes, and substitutions do not make the corresponding technical solutions depart from the spirit and scope of the technical solutions in the embodiments of the present disclosure, they should be within the protection scope of the present disclosure. Therefore, the protection scope of the present disclosure should be determined by the scope of the appended claims.

## Claims

1. A method for associating a target object with an item, wherein the method is applied to a processing device, and the processing device is connected to a laser radar mounted on a rack; a line number of the laser radar is lower than a preset line value, and a sensing range of the laser radar covers each item on the rack;
the method comprises:
acquiring sensing information obtained from that the laser radar senses the target object;
determining a trigger point coordinate of the target object within the sensing range according to the sensing information; and
determining an item associated with the target object according to the trigger point coordinate of the target object and a position coordinate of said each item stored in advance.

2. The method according to claim 1, wherein the laser radar is a mechanical scanning laser radar; the number of the mechanical scanning laser radar is at least one; and a sensing range combination of all the mechanical scanning laser radars covers each item on the rack.

3. The method according to claim 1, wherein the laser radar is a single-point ranging laser radar, and the number of the single-point ranging laser radar is multiple; and the multiple single-point ranging laser radars line up in accordance with a preset interval;
a sensing range combination of the multiple single-point ranging laser radars covers each item on the rack.

4. The method according to claim 2 or 3, wherein the step of determining a trigger point coordinate of the target object within the sensing range according to the sensing information comprises:
determining a serial code of a target laser radar based on the sensing information; wherein the sensing information is generated by the target laser radar, and the sensing information includes a distance value and an azimuth angle of the target object relative to the target laser radar;
searching for a position coordinate of the target laser radar according to the serial code of the target laser radar; and
determining the trigger point coordinate of the target object within the sensing range according to the position coordinate of the target laser radar as well as the distance value and the azimuth angle of the target object relative to the target laser radar.

5. The method according to claim 1, wherein the step of determining an item associated with the target object according to the trigger point coordinate of the target object and a position coordinate of said each item stored in advance comprises:
determining a target item according to the trigger point coordinate of the target object and a position coordinate of said each item stored in advance; wherein the position coordinate of the target item is within a preset distance from the trigger point coordinate of the target object; and
determining the target item as an item associated with the target object.

6. The method according to claim 1, further comprising:
obtaining a height of a respective lamination of the rack;
obtaining position information and size information of said each item; wherein the position information includes a serial code of the lamination on which the item is located, and a horizontal order number of the item on the lamination on which the item is located;
determining a longitudinal position coordinate of said each item according to the serial code of the lamination on which said each item is located and the height of the respective lamination; and
determining a lateral position coordinate of said each item according to the horizontal order number and the size information of said each item.

7. The method according to claim 6, wherein the rack is further longitudinally provided with a circuit board; the circuit board is provided with multiple electrical contacts in a longitudinal direction at a predetermined spacing; each lamination is provided with a thimble through which the lamination is connected with an electrical contact on the circuit board;
the circuit board is further connected to the processing device, and the step of obtaining a height of a respective lamination of the rack comprises:
obtaining a status of the respective electrical contact on the circuit board; the status including a free status or a contact status;
determining a serial code of a target electrical contact according to the status of the respective electrical contact; wherein the target electrical contact is an electrical contact in a contact status; and the number of the target electrical contact matches with the number of the lamination;
searching for position information of the respective target electrical contact according to the serial code of the target electrical contact and a pre-established electrical contact information table; wherein the electrical contact information table stores correspondence between the serial codes and the position information of the electrical contacts; and
determining the height of the respective lamination based on position information of the respective target electrical contact.

8. The method according to claim 7, wherein the circuit board is further provided with a power source for supplying power to electrical equipment on the respective lamination; the electrical equipment includes electronic tags and/or headlamps.

9. An apparatus for associating a target object with an item, wherein the apparatus is applied to a processing device, and the processing device is connected to a laser radar mounted on a rack; a line number of the laser radar is lower than a preset line value, and a sensing range of the laser radar covers a designed area;
the apparatus comprises:
a sensing information acquiring module configured to acquire sensing information obtained from that the laser radar senses the target object;
a trigger point determining module configured to determine a trigger point coordinate of the target object within the sensing range according to the sensing information; and
an association determining module configured to determine an item associated with the target object according to the trigger point coordinate of the target object and a position coordinate of said each item stored in advance.

10. The apparatus according to claim 9, wherein the laser radar is a mechanical scanning laser radar; the number of the mechanical scanning laser radar is at least one; and a sensing range combination of all the mechanical scanning laser radars covers each item on the rack.

11. The apparatus according to claim 9, wherein the laser radar is a single-point ranging laser radar, and the number of the single-point ranging laser radar is multiple; and the multiple single-point ranging laser radars line up in accordance with a preset interval;
a sensing range combination of the multiple single-point ranging laser radars covers each item on the rack.

12. The apparatus according to claim 10 or 11, wherein the trigger point determining module determines a serial code of a target laser radar based on the sensing information; wherein the sensing information is generated by the target laser radar, and the sensing information includes a distance value and an azimuth angle of the target object relative to the target laser radar;
searches for a position coordinate of the target laser radar according to the serial code of the target laser radar; and
determines the trigger point coordinate of the target object within the sensing range according to the position coordinate of the target laser radar as well as the distance value and the azimuth angle of the target object relative to the target laser radar.

13. The apparatus according to claim 9, wherein the association determining module determines a target item according to the trigger point coordinate of the target object and a position coordinate of said each item stored in advance; wherein the position coordinate of the target item is within a preset distance from the trigger point coordinate of the target object; and
determines the target item as an item associated with the target object.

14. A system for associating a target object with an item, wherein the system comprises a laser radar and a processing device;
the laser radar is configured to generate sensing information;
the processing device stores a computer program thereon, the method according to any of claims 1 to 8 is executed when the computer program is executed by the processing device.

15. A non-transitory computer-readable recording medium having stored thereon a computer program, wherein steps of the method according to any of claims 1-8 are carried out when the computer program is executed by a processing device.
